# EUROPEAN PATENT SPECIFICATION

(11) **EP 1 043 178 B1**
(45) Date of publication and mention of the grant of the patent: **20.08.2003**
(21) Application number: 00302933.7
(22) Date of filing: 07.04.2000
(51) Int. Cl.: B60C 19/08, B60C 1/00, C08K 9/02, C08L 21/00

(54) **Pneumatic tyre**
Luftreifen
Bandage pneumatique

(30) Priority: 09.04.1999 JP 10262599
(43) Date of publication of application: 11.10.2000
(73) Proprietor: SUMITOMO RUBBER INDUSTRIES LIMITED, Kobe-shi, Hyogo-ken (JP)
(72) Inventor: Tsumori, Isamu, Amagasaki-shi, Hyogo-ken (JP)
(74) Representative: Stewart, Charles Geoffrey

(56) References cited:
- EP-A- 0 799 854
- EP-A- 0 878 330
- EP-A- 0 896 978

## Description

The present invention relates to a pneumatic tyre having a silica-reinforced tread rubber and electrostatic earth means.

In recent years, in order to decrease the rolling resistance of pneumatic tyres, the use of tread rubber containing silica as a reinforcing agent instead of carbon black has been proposed. Such a silica-reinforced tread rubber is relatively high in electrical resistance. Therefore, it is necessary to provide some electrostatic earth means.

In the laid-open Japanese patent application JP-A-9-71112, therefore, a conductive rubber which comprises a electrostatic collector part extending on the radially inside of the tread rubber and an electrostatic earth part extending from the collector part to the ground contacting face of the tread has been proposed. The conductive rubber is provided with a necessary conductivity by adding carbon black, metallic powder and the like to the ingredients.

In such a conductive rubber, it is necessary to increase the content of the carbon black and the like to improve the conductivity. However, as the content increases, there is a tendency to increase the hysteresis loss of the rubber and hinder the improvement in the rolling resistance by the silica-reinforced tread rubber. Thus, it is difficult to improve the rolling resistance and electrical resistance of the tyre at the same time.

It is therefore, an object of the present invention to provide a pneumatic tyre in which both the electrical resistance and dynamic performance such as rolling resistance are improved.

Accordingly the present invention provides a pneumatic tyre at set out in claim 1. Further features of the invention are set out in the sub-claim.

Preferably, the surface area of the silica is in the range of from 5 to 20% of the total surface area of the silica and carbon. The conductive rubber contains 100 parts by weight of diene rubber base and 35 to 60 parts by weight of the silica-treated carbon black. The volume resistivity of the conductive rubber is not more than 1x10⁸ ohm cm.

Embodiments of the present invention will now be described in detail in conjunction with the accompanying drawings:
Fig.1 is a cross sectional view of a pneumatic tyre according to the present invention;
Fig.2A is a diagrammatic view of an example of the silica-treated carbon black;
Fig.2B is a diagrammatic cross sectional view of another example of the silica-treated carbon black;
Fig.3 shows an example of the tread pattern;
Fig.4 is a cross sectional view of an example of the earth part; and
Fig.5 is a cross sectional view of another example of the earth part.

In the drawings, the pneumatic tyre 1 according to the present invention comprises a tread portion 2, a pair of sidewall portions 3, a pair of bead portions 4 each with a bead core 5 therein, a carcass 6 extending between the bead portions 4, and a tread reinforcing belt 7 disposed radially outside the carcass 6 in the tread portion 2.

In this embodiment, the pneumatic tyre 1 is a radial tyre for passenger cars.

The carcass 6 comprises at least one ply (in this example only one ply) of cords arranged at an angle of 75 to 90 degrees with respect to the tyre equator C and extending between the bead portions 4 and turned up around the bead core 5 in each bead portion 4 to form a pair of turned up portions 6b and a main portion 6a therebetween. For the carcass cords, organic fibre cords, e.g. nylon, polyester, rayon, aromatic polyamide and the like and steel cords can be used. Further, between the carcass ply main portion 6a and each of the turned up portions 6b, a bead apex 8 made of hard rubber is disposed.

The tread reinforcing belt 7 comprises a breaker 9 and optionally a band or bandage.

The breaker 9 comprises at least two crossed plies 9A and 9B each of parallel cords laid at an angle of 15 to 40 degrees with respect to the tyre equator C and extends substantially across the overall width of the tread portion 2. For the breaker cords, steel cords and high-modulus organic fibre cords such as aromatic polyamide cords can be used.

The band (not used in this embodiment) is disposed radially outside the breaker 9 and is to prevent the breaker 9 from being lifted during high speed running and thus to improve the high-speed durability. For example, the band can be composed of at least one nylon cord which is spirally wound on the breaker 9 at least in its axial edge parts at an angle of 0 to 5 degrees with respect to the tyre equator C.

In the tread portion 2, a tread rubber layer 11 made of a silica-reinforced rubber compound g1 is disposed as the radially outermost rubber layer to form a major part of the ground contacting face 2S of the tread portion 2. In this example, the thickness of the tread rubber layer 11 is more than the depth of tread grooves G.

Further, the tread portion 2 is provided radially inside the tread rubber layer 11 with a conductive rubber layer 10 made of a conductive rubber compound g2. The conductive rubber layer 10 comprises a collector part 10A and at least one earth part 10B.

The collector part 10A has a substantially constant thickness and extends over the radially outer surface of the belt 7 while directly contacting therewith. Each earth part 10B penetrates the tread rubber layer 11 to extend from the collector part 10A to the ground contacting face 2S of the tread portion 2.

The silica-reinforced rubber compound g1 contains 30 to 100 parts by weight of silica with respect to 100 parts by weight of rubber base.

For the rubber base, diene rubber compounds, e.g. natural rubber (NR), butadiene rubber (BR), styrene butadiene rubber (E-SBR and S-SBR), synthesis polyisoprene rubber (IR), nitrile rubber (NBR), chloroprene rubber (CR) and the like can be used alone or in combination.

For the silica, in view of the rubber reinforcing effect and rubber processability, one having a surface area based on nitrogen adsorption (BET) of from 100 to 250 sq.m/g, and a dibutyl phthalate oil absorption (DBP) of not less than 150 ml/100g and also having the nature of a colloid is preferably used.

Usually, in order to obtain the desired characteristics for the tread rubber layer 11 such as elasticity, hardness, wear resistance and the like, the silica-reinforced rubber compound g1 contains 3 to 20 parts by weight of carbon black with respect to 100 parts by weight of the above-mentioned diene rubber base and as a result the tread rubber layer 11 has a very high volume resistivity of more than 1X10⁸ ohm cm.

If the content of the carbon black is more than 20 parts by weight, it is difficult to improve the rolling resistance and the like, and the rubber hardness increases undesirably for the tread rubber layer 11. If the silica content exceeds 100 parts by weight, it becomes difficult to add more than 3 parts by weight of carbon black, and as a result, the resistance to photo-oxidative degradation is decreased.

On the other hand, the conductive rubber compound g2 has a volume resistivity of not more than 1X10⁸ ohm cm.

In the conductive rubber compound g2, silica-treated carbon black is used as the reinforcing agent instead of silica and carbon black. Neither silica nor carbon black is used.

The silica-treated carbon black has a silica-containing part at least at the surface of the particle.

Preferably, the silica-treated carbon black is such that the silica 21 occupies 5 to 20 % of the overall surface area of the particles. If the silica surface area is less than 5 %, the rolling resistance can not be improved. If the silica surface area is more than 20 %, the required electrical conductivity can not be obtained.

The content of the silica-treated carbon black is 35 to 60 parts by weight with respect to 100 parts by weight of diene rubber base.

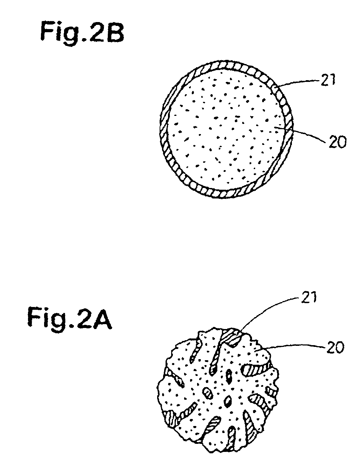

Fig.2A diagrammatically shows an example of a particle of the silica-treated carbon black in which carbon 20 and silica 21 are three-dimensionally mixed into a particle. In other words, both the carbon 20 and silica 21 exist inside the particle. This type of carbon black is disclosed in International Application PCT/US96/07310 (Publication No. WO 96/37547).

Fig.2B diagrammatically shows another example of a particle of the silica-treated carbon black in which the surface of a carbon particle is covered with silica 21. This type of carbon black is disclosed in Japanese patent No.2788212.

In the present invention, the former example is preferred in particular because active sites on the surface are the same or more than the general carbon black, and thus plenty of bound rubber is available and thus the reinforcing effect is high.

Incidentally, in the silica-reinforced rubber compound g1 and conductive rubber compound g2, other additives such as vulcanising agent, vulcanisation accelerator, auxiliary vulcanisation accelerator, plasticiser, age resistor, silane coupling agents and the like can be used if necessary.

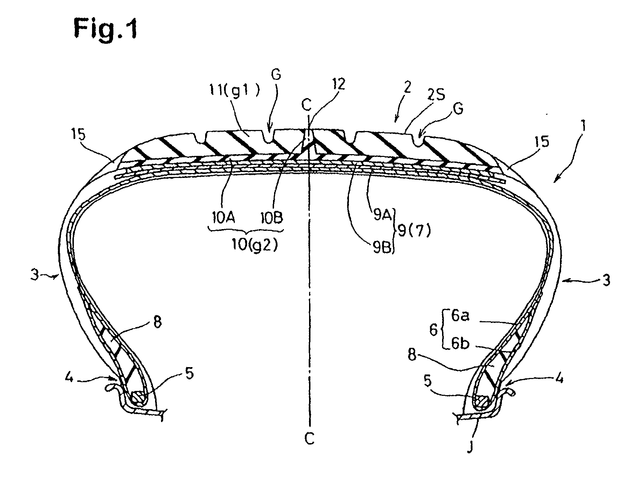

In the example shown in Fig.1, the collector part 10A extends continuously across the tread width while directly contacting with the inner surface of the tread rubber layer 11. The axial edges of the collector part 10A and the tread rubber layer 11 are disposed at the substantially same axial positions as the axial edges of the breaker 7. On each side of the tread rubber layer 11 and conductive rubber layer 10, a wing rubber 15 is disposed.

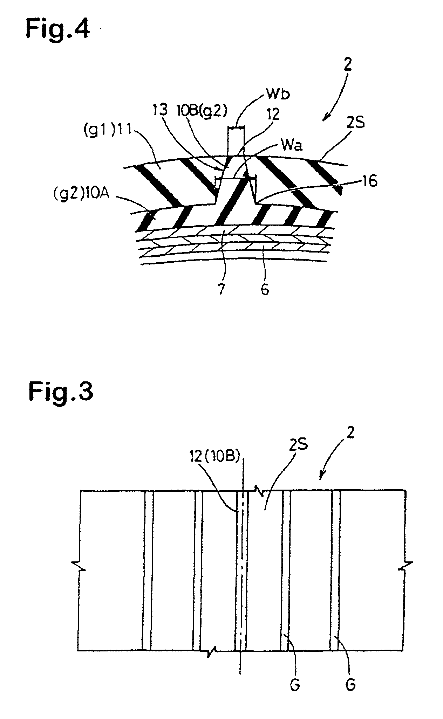

In the tread pattern shown in Fig.3, a single circumferentially-continuous earth part 10B is provided along the tyre equator C. However, it is also possible to provide a plurality of circumferentially-continuous earth parts 10B. Also it is possible to provide circumferentially-discontinuous earth parts 10B in a single circumferential row or a plurality of circumferential rows.

As to the discontinuous earth parts 10B, there are the following two cases (a) and (b): (a) a radially inner base part is circumferentially continuous, but a radially outer part is divided by lateral grooves and thus circumferentially discontinuous; (b) entirely discontinuous from the radially inner end 16 to the radially outer end 12 like a column.

The circumferential arrangement of discontinuous earth parts 10B is such that at least one of the earth parts 10B always exists in the footprint of the tyre during running.

Preferably, each earth part 10B is at least partially tapered radially outwards from the radially inner end 16 to form a narrow width part 13 having a minimum axial width Wb. Preferably, the minimum width Wb is set in the range of from 60 to 80 % of the width Wa at the radially inner end 16.

On the other hand, the width Wb at the ground contacting face 2S is set in the range of from 0.5 to 20.0 mm, preferably 5 to 20 mm.

In Fig.4, the earth part 10B is tapered from the radially inner end 16 to the ground contacting face 2S. Thus, the axial width is minimum at the ground contacting face 2S.

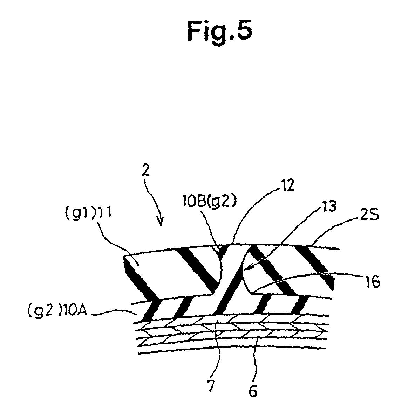

Fig.5 shows another example of the earth part 10B, in which the narrow part 13 is formed in the middle of the radial extent of the earth part 10B. From this narrow part 13 to the radially outer end 12, the width increases, and at the radially outer end 12, the width becomes substantially equal to the width at the radially inner end 16.

In any case, it is preferable that the surfaces of the earth part 10B and the collector part 10A are connected at the inner end 16 through a smooth curve to prevent stress concentration. By providing the narrow part 13, the earth part 10B can be prevented from being cracked at the radially inner end 16.

In the case of the above-mentioned discontinuous earth parts 10B, various shapes, e.g. circle, rectangle and the like can be used as a shape in a plane parallel to the ground contacting face 2S.

Usually, the collector part 10A and the earth part 10B are made of the same conductive rubber compound g2. But it is also possible to make them out of different conductive rubber compounds.

As to the electric path between the conductive rubber layer 10 and the surface of the bead portions 4 contacting with the wheel rim, it is formed by employing conductive rubber compounds in making the bead portions 4 and sidewall portions 3 and in rubberising the reinforcing cord plies such as carcass ply, belt ply and the like. The conductive rubber compounds here may be the usual rubber compounds having a relatively high carbon black content. The volume resistivity thereof is set in the range of less than 1X10⁸ ohm cm. Also it is possible to form an electrical path by employing steel cords in the carcass 6 and belt 7.

### Comparison Tests

Test tyres (size 175/70R13) having the structure shown in Fig.1 were made and tested for rolling resistance, wet performance, and electric resistance.

### Rolling resistance test

The rolling resistance of each tyre was measured with a rolling resistance tester made by KOBE KIKAI KK and is indicated in Table 1 by an index based on Reference tyre 2 being 100. The larger the index, the better the rolling resistance.

### Wet performance test

A passenger car provided on the front wheels with test tyres was run on a wet asphalt road with a water depth of 5 mm along a 50 meter radius circle and the maximum lateral-G was measured as wet performance by increasing the running speed. The results are indicated in Table 1 by an index based on reference tyre 2 being 100. The larger the index, the better the wet performance.

### Electric resistance test

According to German WDK Blatt3, the electric resistance between a wheel rim and a steel board on which the tyre was put was measured under the following conditions: applied voltage 500 V; atmospheric temperature 25 deg.C; humidity 50 %; tyre pressure 200 Kpa; and vertical tyre load 450 Kgf. The results are indicated in Table 1 using a logarithm.

**Table 1**

| Tyre | Ref.1 | Ref.2 | Ref.3 | Ex.1 | Ex.2 | Ex.3 | Ref.4 | Ref.5 |
|---|---|---|---|---|---|---|---|---|
| Rubber compound | | | | | | | | |
| Tread rubber layer | 1 | 1 | 3 | 1 | 2 | 1 | 2 | 3 |
| Conductive rubber layer | 6 | 7 | 6 | 4 | 4 | 5 | 6 | 4 |
| Rolling resistance | 104 | 100 | 85 | 104 | 101 | 103 | 102 | 80 |
| Wet performance | 100 | 100 | 90 | 100 | 99 | 100 | 99 | 90 |
| Electric resistance | 12.8 | 7.6 | 6 | 7.6 | 7.3 | 6.4 | 12.5 | 6.3 |

The rubber of the bead portion and sidewall portion had a volume resistivity of about 1X10⁷ ohm cm.

**Table 2**

| Rubber compound | 1 | 2 | 3 | 4 | 5 | 6 | 7 |
|---|---|---|---|---|---|---|---|
| Ingredients (parts by weight) | | | | | | | |
| Rubber base | | | | | | | |
| NR | 30 | 30 | 30 | 50 | 50 | 50 | 50 |
| S-SBR(*1) | 50 | 50 | 50 | - | - | - | - |
| BR(*2) | 20 | 20 | 20 | 50 | 50 | 50 | 50 |
| Reinforcing agent | | | | | | | |
| Silica (*3) | 70 | 55 | 25 | - | - | - | - |
| Carbon black (*4) | 5 | 15 | 45 | - | - | - | - |
| Carbon black (*5) | - | - | - | - | - | 35 | 55 |
| Silica-treated carbon (*6) | - | - | - | 40 | 55 | - | - |
| Oil | 40 | 40 | 40 | 5 | 5 | 5 | 5 |
| Silane (*7) | 5.6 | 4.4 | 2 | - | - | - | - |
| Volume resistivity (*8) | 13.8 | 13.4 | 6.8 | 7.8 | 6.5 | 13.5 | 7.9 |
| Loss tangent(*9) | 0.16 | 0.18 | 0.26 | 0.08 | 0.1 | 0.07 | 0.13 |

| | | | | | | | |
|---|---|---|---|---|---|---|---|
| *1 SL574 (S-SBR: styrene 15%, vinyl 57%, non oil extended) made by NIHON GOUSEIGOMU | | | | | | | |
| *2 BR 1220 (high-cis BR with cis form 98%) made by NIHON ZEON | | | | | | | |
| *3 ULTRASIL VN-3 (silica: BET 175 sq.m/g, DBP oil absorption 210 ml/100g) made by DEGUSA | | | | | | | |
| *4 Carbon (primary particle diameter 16nm) made by MITSUBISHI KAGAKU | | | | | | | |
| *5 N351 carbon (primary particle diameter 28nm) made by SHOWA CABOT | | | | | | | |
| *6 CRX2000 made by SHOWA CABOT | | | | | | | |
| *7 Silane coupling agent Si69 [vis (triethoxysilylpropyl) tetrasulfide] made by Degussa | | | | | | | |
| *8 The value in ohm cm is indicated by a logarithm, which value was measured with an electric resistance meter (ADVANTESTER 8340A) under the following conditions: applied voltage 500 V, atmospheric temperature 25 deg.C and humidity 50 %. | | | | | | | |
| *9 The value measured with a viscoelastic spectrometer made by IWAMOTO SEISAKUSYO under the following conditions: temperature 70 deg.C, initial elongation 10 %, frequency 10Hz and amplitude of dynamic strain ±1.0%. | | | | | | | |

## Claims

1. A pneumatic tyre (1) comprising a tread rubber layer (11) and a conductive rubber layer (10), the tread rubber layer (11) being disposed along a ground contacting face (2S) of the tyre and made of a silica-reinforced rubber compound, the conductive rubber layer (10) comprising a collector part (10A) located radially inside the tread rubber layer (11) and an earth part (10B) penetrating the tread rubber layer (11) to extend from the collector part (10A) to the ground contacting face (2S) of the tyre, **characterised in that** the conductive rubber layer (10) is made of a conductive rubber compound (g2) containing silica-treated carbon black, the silica-treated carbon black being composed of carbon and silica chemically and/or physically bonded to the carbon so that the silica has a surface area in the range of from 5 to 20% of the total surface area of the silica and carbon.

2. A pneumatic tyre according to claim 1, **characterised in that** the silica-reinforced rubber compound contains 100 parts by weight of diene rubber base, 30 to 100 parts by weight of silica, and 3 to 20 parts by weight of carbon black, the conductive rubber contains 100 parts by weight of dime rubber base, and 35 to 60 parts by weight of the silica-treated carbon black, and the conductive rubber has a volume resistivity of not more than 1X10⁸ ohm cm.

## Patentansprüche

1. Luftreifen (1) mit einer Laufstreifen-Gummischicht (11) und einer leitfähigen Gummischicht (10), wobei die Laufstreifen-Gummischicht (11) längs einer Bodenkontaktfläche (2S) des Reifens angeordnet und aus einer mit Kieselsäure verstärkten Gummimischung hergestellt ist, die leitfähige Gummischicht (10) einen Kollektorteil (10A), der radial innerhalb der Laufstreifen-Gummischicht (11) angeordnet ist, sowie einen Erdeteil (10B) umfasst, der die Laufstreifen-Gummischicht (11) durchdringt, so dass er sich von dem Kollektorteil (10A) zur Bodenkontaktfläche (2S) des Reifens erstreckt, **dadurch gekennzeichnet, dass** die leitfähige Gummischicht (10) aus einer leitfähigen Gummimischung (g2) hergestellt ist, die mit Kieselsäure behandelten Ruß enthält, wobei der mit Kieselsäure behandelte Ruß aus Kohlenstoff und Kieselsäure, die chemisch und/oder physikalisch mit dem Kohlenstoff gebunden ist, zusammengesetzt ist, so dass die Kieselsäure eine Oberfläche im Bereich von 5 bis 20 % der Gesamtoberfläche der Kieselsäure und des Kohlenstoffes aufweist.

2. Luftreifen nach Anspruch 1, **dadurch gekennzeichnet, dass** die mit Kieselsäure verstärkte Gummimischung 100 Gewichtsteile Dienkautschukbasis, 30 bis 100 Gewichtsteile Kieselsäure und 3 bis 20 Gewichtsteile Ruß enthält, der leitfähige Gummi 100 Gewichtsteile Dienkautschukbasis und 35 bis 60 Gewichtsteile des mit Kieselsäure behandelten Rußes enthält und der leitfähige Gummi einen spezifischen Volumen-Widerstand von nicht mehr als 1x10⁸ Ohm cm aufweist.

## Revendications

1. Pneumatique (1) comportant une couche (11) de caoutchouc de bande de roulement et une couche (10) de caoutchouc conducteur, la couche (11) de caoutchouc de bande de roulement étant disposée le long d'une face (2S) de contact avec le sol du pneumatique et étant formée d'une composition de caoutchouc armée de silice, la couche (10) de caoutchouc conducteur comprenant une partie collectrice (10A) placée radialement vers l'intérieur de la couche (11) de caoutchouc de la bande de roulement et une partie de terre (10B) pénétrant dans la couche (11) de caoutchouc de bande de roulement afin qu'elle s'étende de la partie collectrice (10A) vers la face de contact avec le sol (2S) du pneumatique, **caractérisé en ce que** la couche (10) de caoutchouc conducteur est formée d'une composition de caoutchouc conducteur (g2) contenant du noir de carbone traité par de la silice, le noir de carbone traité par de la silice étant composé de carbone et de silice liée chimiquement et/ou physiquement au carbone de manière que la silice ait une surface spécifique comprise entre 5 et 20 % de la surface spécifique totale de la silice et du carbone.

2. Pneumatique selon la revendication 1, **caractérisé en ce que** la composition de caoutchouc armée de silice contient 100 parties en poids d'une base de caoutchouc de diène, 30 à 100 parties en poids de silice et 3 à 20 parties en poids de noir de carbone, le caoutchouc conducteur contenant 100 parties en poids de la base de caoutchouc de diène, et 35 à 60 parties en poids de noir de carbone traité par de la silice, et le caoutchouc conducteur a une résistivité en volume qui ne dépasse pas 1.10⁸ Ω.cm.
